# EUROPÄISCHE PATENTSCHRIFT

(11) **EP 2 197 672 B1**
(45) Veröffentlichungstag und Bekanntmachung des Hinweises auf die Patenterteilung: **08.01.2014**
(21) Anmeldenummer: 08838232.0
(22) Anmeldetag: 13.10.2008
(51) Int. Cl.: B32B 27/12, E05D 1/02

(54) **AUSLENKBARE ANORDNUNG AUS POLYMERSTREIFEN**
DEFLECTABLE ARRANGEMENT MADE OF POLYMER STRIPS
ENSEMBLE FLEXIBLE DE BANDES POLYMÈRES

(30) Priorität: 13.10.2007 DE 202007014349 U
(43) Veröffentlichungstag der Anmeldung: 23.06.2010
(73) Patentinhaber: Rehau AG + Co, 95111 Rehau (DE)
(72) Erfinder: GOLDSTEIN, Jörg, 95028 Hof (DE); HERMANN, Andreas, 95111 Rehau (DE); ZEEH, Jürgen, 95194 Regnitzlosau (DE); ENGELHARDT, Dieter, 95179 Geroldsgrün (DE)
(86) Internationale Anmeldenummer: PCT/EP2008/008638
(87) Internationale Veröffentlichungsnummer: WO 2009/047008

(56) Entgegenhaltungen:
- EP-A- 0 104 112
- EP-A- 0 635 619
- EP-A- 1 738 895
- WO-A-2004/106121
- DE-A1- 4 230 738
- DE-A1- 19 910 290
- DE-A1- 19 910 309
- GB-A- 2 335 232
- US-A- 5 762 852

## Beschreibung

Die Erfindung betrifft eine auslenkbare Anordnung aus Polymerstreifen.
Derartige Anordnungen sind bekannt und in großer Zahl im Einsatz als Rollos, Rollladen, verschiebbare und aufrollbare Abdeckungen, Schwimmbadabdeckungen und dergleichen mehr.
Ihnen allen gemeinsam ist, dass Polymerstreifen, im Allgemeinen im Extrusionsverfahren hergestellte Kunststoffprofile, so angeordnet werden, dass ein Flächengebilde entsteht, das entlang der Streifenlängsränder auslenkbar ist, indem dort ein Scharnier ausgebildet ist. Dies kann in Form einer an ein Körpergelenk erinnernden "Knochen-Pfanne-Lösung" ausgebildet sein, andere Lösungen umfassen ein sogenanntes Filmscharnier oder auch eine Lösung unter Ausnutzung einer weichen Lippe aus einem bevorzugt weichgemachten oder elastomeren Polymermaterial, wobei meist die Polymerstreifen aus hartem Material hergestellt sind.
Das Scharnier stellt die Verbindung zwischen den Polymerstreifen her und erlaubt bis zu einem gewissen Grad die Auslenkung, die für das Aufrollen oder Bewegen der Polymerstreifenanordnung entlang gekrümmter Bahnen erforderlich ist.

Nachteilig an diesem Stand der Technik ist, dass eine aufwendige Herstelltechnik erforderlich ist, dass die Auslenkeigenschaften jeweils durch das zugrunde liegende Konstruktionsprinzip mehr oder weniger limitiert sind und dass ein solches Scharnier wenig Möglichkeiten beinhaltet, optisch ansprechende Lösungen zu realisieren.

Hier setzt die Erfindung ein, die es sich zur Aufgabe gemacht hat, eine auslenkbare Anordnung aus Polymerstreifen anzugeben, die einfach herzustellen ist, in weiten Bereichen vorgebbare Auslenkeigenschaften aufweist und mit der insbesondere auch optisch ansprechende Lösungen zu realisieren sind.

Die Lösung der Aufgabe gelingt gemäß Anspruch 1 durch die Bereitstellung einer Anordnung, die aus mindestens zwei Polymerstreifen besteht, wobei ein Faserverbund die Polymerstreifen randseitig verbindet.

Faserverbund und Polymerstreifen sind dabei stoffschlüssig miteinander verbunden.

Als Faserverbund wird in diesem Zusammenhang eine Struktur aus einer Anzahl von Fasern bezeichnet, die dünn sind und die eine geringe Knicksteifigkeit aufweisen.

Die Fasern werden dabei in Form von textilen Flächengebilden eingesetzt.
Solche textilen Flächengebilde umfassen Stoffe, Vliesstoffe, Filze, Gewebe, Gestricke, Gewirke, Geflechte oder durch Walken hergestelltes Textil.

In allen Fällen werden zur Herstellung des Textils Fasern eingesetzt

Im Rahmen der Erfindung wird insbesondere ein textiles Flächengebilde, in Form eines Stoffes, eingesetzt, um die mindestens zwei Polymerstreifen auslenkbar zu verbinden.

Durch Auswahl des textilen Flächengebildes kann
- die Farbgebung
- das Design
- die Lichtdurchlässigkeit
- die Luftdurchlässigkeit
- die Steifheit
- das Rückstellvermögen
- die Wasseraufnahme
der auslenkbaren Anordnung in weiten Bereichen vorgegeben werden.

Vielfältige Möglichkeiten ergeben sich durch den Einsatz einer heute nahezu unbegrenzten Auswahl an textilen Flächengebilden, die für einen derartigen Einsatz geeignet sind.

Insbesondere ist es im Rahmen der vorliegenden Erfindung möglich, durch Kombinationen/abschnittsweises Anordnen/Auswahl der textilen Flächengebilden sowohl die Auslenkeigenschaften wie auch das Erscheinungsbild der Anordnung in weiten Grenzen auf die technischen/optischen Bedürfnisse, die an die Anordnung gestellt werden, leicht anzupassen.

So gelingt es, eine bevorzugt einnehmbare Raumrichtung der auslenkbaren Anordnung durch ein steifes Gewebe, das beispielsweise thermisch verformt ist und nur unter Kraftaufwand aus dieser vorgegebenen Form auslenkbar ist, zu realisieren.

Ganz allgemein kann die Eigenschaft der auslenkbaren Anordnung durch die Auswahl der Fasern/Filamente hinsichtlich Polymerauswahl, Rezeptierung der Zusammensetzung, Zusatzstoffe, Dicke und Form der Faser/des Filaments, Art der Bindung zu einem Textil, Aufbau des Textils, Anordnung und Eigenschaften der aus dem Textil resultierenden Scharnierfunktion zwischen den zwei Streifen aus Polymermaterial, und aus der Kombination daraus, vorgegeben werden.

Es liegt auch im Rahmen der vorliegenden Erfindung, dass der Textilstreifen gelocht oder geschlitzt, mit großer Maschenweite ausgewählt oder anderweitig mit Durchbrüchen versehen sein kann, wobei das Polymermaterial bei der Herstellung im Coextrusionsverfahren dadurch eine verbesserte Anbindung zum Textil herstellt, indem Polymermaterial in diese Durchbrüche eindringt bzw. eine große Anbindungsfläche auf der Textiloberfläche realisiert wird.
Auf diese Weise gelingt es, einen besonders festen Verbund zwischen Polymermaterial des Streifens und dem Textil herzustellen.

Es kann weiterhin vorgesehen sein, die Fasern/Filamente des Faserverbunds oberflächlich zu behandeln, wobei physikalische und/oder chemische Methoden einsetzbar sind, um eine bessere Anbindung des Textils an das Polymermaterial zu erreichen.
Hierzu kann die Oberfläche der Fasern bzw. des Faserverbundes mittels Koronabehandlung, vorzugsweise mit Niederfrequenz-/Hochfrequenzkorona, Beflammung, Plasmabehandlung, Fluorierung, Silikatisierung, vorzugsweise Flammpyrolyse von Silanen oder eine Kombination daraus behandelt sein.
Mit den genannten Maßnahmen lässt sich die Oberflächenenergie der Fasern erhöhen, so dass die Haftung am Polymermaterial verbessert wird.

Auch eine chemische Vorbehandlung der Fasern/Filamente ist in diesem Zusammenhang möglich. Mittels einer sogenannten Schlichte, die bei der Herstellang der Fasern aufgetragen wird, kann die Oberfläche der Fasern/Filamente derart verändert werden, dass die Haftung zum Polymermaterial verbessert wird.

In einer weiteren Ausführung gemäß der Erfindung kann auch das bei der Anwendung erfolgende Auftragen einer Beschichtung auf den Fasernverbund vorgesehen sein, wobei dies eine Primerung durch Sprühen, Walzauftrag, Gießen, Fluten umfassen kann. Diese Maßnahme kann die Anhaftung angrenzender Polymerschichten an der Faseroberfläche begünstigen.

Als synthetische Fasern, die dem Stoff eine besonders hohe Festigkeit verleihen, kommen Glasfasern oder Polyamidfasern oder Aramidfasern oder Kohlefasern oder Polyesterfasern - insbesondere solche, die durch Reckung verstärkt sind - oder Mischungen der vorgenannten Fasern in Betracht. Auch Metallfasern oder Gesteinsfasern können zu diesem Zweck eingesetzt werden.
Neben Polyesterfasern können auch Fasern aus anderen Polymeren eingesetzt werden. Auch Keramikfasern lassen sich verwenden.

Als natürliche Fasern eignen sich Pflanzenfasern und Fasern tierischen Ursprungs. Pflanzenfasern umfassen in diesem Sinne Baumwoll-, Kapok-, Pappelflaum-, Bambus-, Brennnessel-, Hanf-, Jute-, Leinen-, Ramie-, Holz-, Sisal-, Manila-, Kokos-, Cellulose-, Miscanthus-Fasern.
Fasern tierischen Ursprungs können Wolle, Alpaka, Lama, Vikunja, Guanako, Angora, Kanin, Kaschmir, Kamelhaar, Mohair, Ziegenhaar, Rinderhaar, Rosshaar sein.
Daneben können auch Seiden eingesetzt werden, die aus Maulbeerseide oder Tussahseide oder Muschelseide ausgewählt sein können.

Die vorstehend genannten Fasern können auch in einer Mischzusammensetzung, wobei also zwei oder mehr unterschiedliche Fasern den Faserverbund bilden, eingesetzt werden.

Je nach Anforderung an die Eigenschaften des Verbundes können zu dessen Herstellung Lang- oder Kurzfasern oder Mischungen der vorgenannten herangezogen werden.

In einer Weiterbildung der Erfindung kann der Faserverbund seinerseits mit einer dünnen auslenkbaren Polymerschicht überzogen sein, wobei das Polymer dem der Polymerstreifen entsprechen kann oder auch unterschiedlich ist.

Die Polymerschicht auf dem Faserverbund kann insbesondere nur abschnittsweise vorhanden sein und so die "Scharnierfunktion" des derart modifizierten Faserverbundes vorteilhaft unterstützen.
Dies kann beispielsweise an den Rändern eines derartigen Flächenelements wünschenswert sein; der Faserverbund ist dort dann entsprechend verstärkt.

Der Faserverbund kann durch geeignete Auswahl der Fasern/Filamente und der Art des Faserverbundes Muster, Signets oder Bilder zeigen, die vorteilhaft die Anordnung aus Polymerstreifen optisch aufwerten. Hierzu können beispielsweise verschiedenfarbige Fasern vorgesehen sein.

Es kann aber auch vorgesehen sein, den Faserverbund zu bedrucken oder nach einer anderen Technik nach dessen Herstellung oberflächlich zu dekorieren, um Muster, Signets und Bilder zu erzeugen.

Optisch ansprechende Effekte lassen sich auch generieren, indem die Faser-/Filamentauswahl so getroffen wird, dass Licht den Faserverbund mehr oder weniger durchdringen kann und so ein gefälliges Aussehen der erfindungsgemäßen Anordnung resultiert.

Durch ein Zusammenwirkungen von Auflicht und/oder Durchlicht ergibt sich eine interessante und in der Anmutung wertvolle Optik der Anordnung gemäß der vorliegenden Erfindung.

Der Polymerstreifen ist aus Polymermaterial hergestellt.

Bevorzugt ist das Polymermaterial ein Thermoplast.
Als Thermoplaste eignen sich: Polyolefine, Polyester, Polyamide, Polycarbonate, Polystyrole, Polyurethane, sowie die Copolymer davon und Mischzusammensetzungen der vorgenannten.
Besonders bevorzugt ist der Polymerstreifen aus einem Polypropylen.

In einer Weiterbildung der vorliegenden Erfindung kann auch vorgesehen sein, dass die Streifen als Schwalbenschwanz- oder gleichartig wirkende hintergreifende Verbindung gestaltet sind, die ihrerseits mit einem komplementär gestalteten weiteren Formteil unter Festlegung in Wirkverbindung treten können.

Dadurch ist es möglich, die Anordnung gemäß der vorliegenden Erfindung in einfacher Weise für die Verbindung von unterschiedlich gestalteten Formteilen einzusetzen. Auf diese Weise sind beispielsweise Schwimmbadabdeckungen mit Schwimmkörpern unterschiedlichen Querschnitts bzw. unterschiedlicher Form leicht realisierbar, indem in einer dort vorgesehenen Schwalbenschwanznut eine am Streifen komplementär gestaltete auslenkbare Anordnung eingeschoben und festgelegt ist.

Es versteht sich von selbst, dass gemäß der vorstehend wiedergegebenen Lehre beliebig viele Anordnungen mit parallel zueinander liegenden Streifen, zwischen denen jeweils der Faserverbund das "Scharnier" bildet, positioniert werden können.
Auf diese Weise ist ein zweidimensionales Flächengebilde zugänglich, das an den durch den Faserverbund verbundenen Streifen auslenkbar ist.
Das Flächengebilde kann als Rollo oder Abdeckung verwendet werden.

Die bevorzugten Ausführungsbeispiele und Merkmale der genannten Erfindung werden nachstehend mit Bezug auf die beiliegende Zeichnung beschrieben.

Kurze Beschreibung der Figuren:
Fig. 1 zeigt schematisch eine auslenkbare Anordnung aus Polymerstreifen;
Fig. 2 zeigt schematisch eine auslenkbare Anordnung aus Polymerstreifen im Detail.

### Detaillierte Beschreibung eines bevorzugten Ausführungsbeispiels der Erfindung:

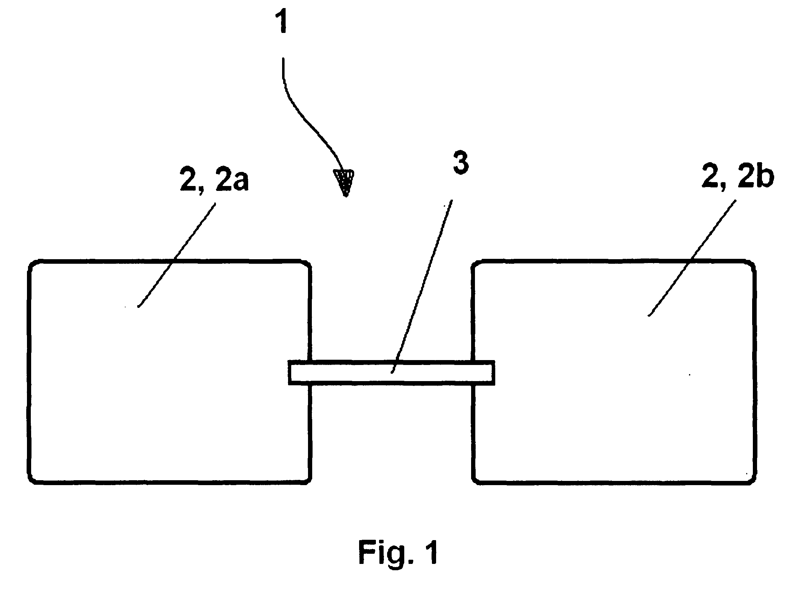

Die nachstehend mit Bezug auf Fig. 1 beschriebene Erfindung betrifft eine auslenkbare Anordnung 1 aus Polymerstreifen 2, umfassend zwei Polymerstreifen 2a und 2b und einem Faserverbund 3.
Der Faserverbund 3 ist mit den Polymerstreifen 2a, 2b randseitig verbunden. Durch geeignete Wahl des Faserverbundes 3 ermöglicht dieser eine Auslenkung der Polymerstreifen 2a, 2b gegeneinander.

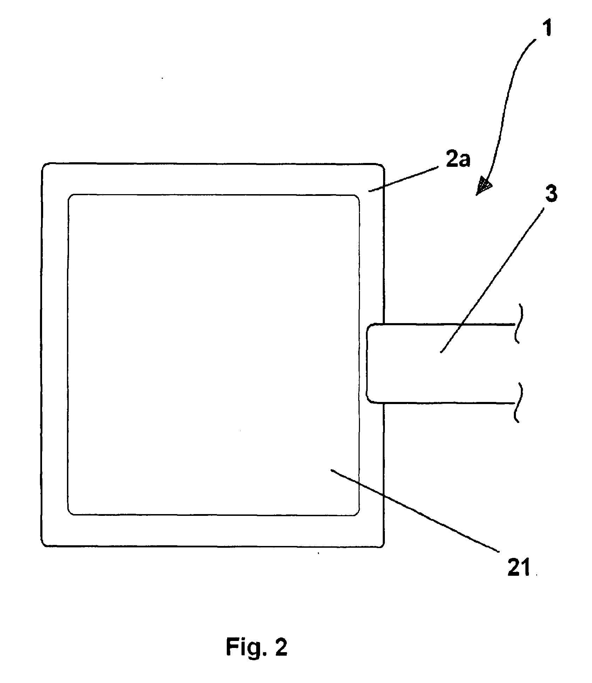

Der Aufbau einer erfindungsgemäßen Anordnung 1 ist anschaulich der detaillierten Schnittdarstellung gemäß Fig. 2 zu entnehmen.

Die auslenkbare Anordnung 1 aus einem Polymerstreifen 2a, der eine Hohlkammer 21 aufweist, und einem Faserverbund 3 ist derart aufgebaut, dass der Faserverbund 3 im Polymermaterial des Polymerstreifens 2a eingebunden ist.

### Verfahren zur Herstellung:

Dem Coextrusionswerkzeug, das aus Polymermaterial zwei parallele Streifen erzeugt, ist eine Einrichtung zugeordnet, einen Faserverbund zuführen zu können.
Hierzu werden die Spannung, Zuführgeschwindigkeit und Temperatur des Faserverbundes gesteuert und überwacht.
Vor dem Einlaufen des Faserverbundes in das Coextrusionswerkzeug kann der Faserverbund am Rand aktiviert werden, indem dort örtlich und zeitlich begrenzt beispielsweise eine Flamme einwirkt. Durch die Aktivierung ist die Anhaftung des Polymermaterials verbessert.

### Vorrichtung:

In einem Coextrusionswerkzeug werden aus Polymermaterial zwei parallele Streifen durch Extrusion hergestellt. Das Coextrusionswerkzeug ist so gestaltet, dass Streifen resultieren, die beispielsweise Hohlprofile oder Stäbe sind.
Dem Coextrusionswerkzeug ist eine Einrichtung zugeordnet, einen Faserverbund zuführen zu können.
Das Coextrusionswerkzeug ist dabei so gestaltet, dass der Faserverbund im Polymermaterial der beiden zu verbindenden Streifen eingebunden wird.
Im Coextrusionswerkzeug erfolgt die Verbindung von Faserverbund und Polymermaterial des Streifens.
Dem Coextrusionswerkzeug kann eine Einrichtung vorgeschaltet sein, um den Faserverbund mittels einer Flammbehandlung zu aktivieren.
In einer Abwandlung der vorliegenden Erfindung kann aber auch vorgesehen sein, dass der Faserverbund nicht durch einen Coextrusionsprozess mit dem Polymerstreifen verbunden ist, sondern durch einen Klebeprozess oder einen Schweißprozess am Streifen befestigt wird.

### Ausführungsbeispiel:

Zwei Streifen aus Polyethylenterephthalat werden extrudiert. Der Faserverbund ist ein gewebtes Band aus Aramidfasern. Dieses wird im Extrusionswerkzeug im Polyethylenterephthalat eingebunden, wodurch die erfindungsgemäße Anordnung entsteht.

### Anwendung:

Anwendungen findet die auslenkbare Anordnung gemäß der vorliegenden Erfindung als Möbelschrank-Rolladen, Rollo, Abdeckung, Schwimmbadabdeckung, Klappe, bewegliche Fläche oder Leiste, bewegliches Zierelement, Verschluss oder Anzeigeelement. Generell können die Profilstreifen aus einem Vollmaterial bestehen, alternativ aber auch als Hohlprofil ausgebildet sein.

Die Erfindung ist bei der Herstellung von Scharnieren für Möbel von Interesse. Hierbei wird z.B. ein Profilstreifen am Möbelkorpus und der andere Profilstreifen an einer am Möbelkorpus anzuschlagenden Tür befestigt. Diese Befestigung kann z.B. an den entsprechenden Schmalseiten erfolgen, also insbesondere analog zur Befestigung von Kantenbändern oder Abdeckprofilen an einer Schmalseite durch Klemmung, Verklebung oder Verclipsung. Somit übernimmt die erfindungsgemäße Vorrichtung nicht nur die Scharnierfunktion, sondern die Profilstreifen decken gleichzeitig die entsprechende Schmalseite von Korpus und Tür optisch ansprechend ab."

Anwendungsfelder eröffnen sich für die vorliegende Erfindung im Möbelbau, Messebau, Ladenbau, Automobilbau, in der Elektrotechnik, Bürotechnik, Schwimmbadtechnik, Gartentechnik, Landwirtschaft, Lebensmittelindustrie, Pharmaindustrie, Gesundheitswesen und Medizintechnik.

## Patentansprüche

1. Verwendung einer
auslenkbaren Anordnung aus zwei Polymerstreifen mit einem die Polymerstreifen randseitig verbindenden Faserverbund
als Möbelscharnier, wobei der eine Polymerstreifen an einer Schmalseite eines Möbelkorpus und der andere Polymerstreifen an einer Schmalseite einer am Möbelkorpus anzuschlagenden Tür befestigt wird.

2. Verwendung nach Anspruch 1, **dadurch gekennzeichnet, dass** der Faserverbund ein textiles Flächengebilde ist.

3. Verwendung nach Anspruch 2, **dadurch gekennzeichnet, dass** das textile Flächengebilde ein Stoffe, Vliesstoff, Filz, Gewebe, Gestrick, Gewirk, Geflecht oder durch Walken hergestelltes Textil ist.

4. Verwendung nach einem der vorangehenden Ansprüche, **dadurch gekennzeichnet, dass** das textile Flächengebilde aus Fasern besteht.

5. Verwendung nach Anspruch 4, **dadurch gekennzeichnet, dass** die Fasern aus Glasfasern oder Polyamidfasern oder Polyesterfasern oder Fasern aus einem Polymermaterial oder Aramidfasern oder Kohlefasern oder Metallfasern oder Gesteinsfasern oder Keramikfasern ausgewählt sind.

6. Verwendung nach Anspruch 4, **dadurch gekennzeichnet, dass** die Fasern aus Pflanzenfasern und Fasern tierischen Ursprungs ausgewählt sind, wobei Pflanzenfasern Baumwoll-, Kapok-, Pappelflaum-, Bambus-, Brennnessel-, Hanf-, Jute-, Leinen-, Ramie-, Holz-, Sisal-, Manila-, Kokos-, Cellulose-, Miscanthus-Fasern umfassen, und Fasern tierischen Ursprungs Wolle, Alpaka, Lama, Vikunja, Guanako, Angora, Kanin, Kaschmir, Kamelhaar, Mohair, Ziegenhaar, Rinderhaar, Rosshaar, sowie Seiden, ausgewählt aus Maulbeerseide oder Tussahseide oder Muschelseide.

7. Verwendung nach einem der Ansprüche 4 bis 6, **dadurch gekennzeichnet, dass** eine Mischzusammensetzung der bezeichneten Fasern eingesetzt ist.

8. Verwendung nach einem der Ansprüche 4 bis 7, **dadurch gekennzeichnet, dass** Langoder Kurzfasern oder Mischungen der vorgenannten eingesetzt sind.

9. Verwendung nach einem der vorangehenden Ansprüche, **dadurch gekennzeichnet, dass** der Faserverbund gelocht oder geschlitzt oder mit großer Maschenweite ausgewählt oder anderweitig mit Durchbrüchen versehen ist.

10. Verwendung nach einem der vorangehenden Ansprüche, **dadurch gekennzeichnet, dass** die Fasern/Filamente des Faserverbunds oberflächlich mit physikalischen und/oder chemischen Methoden behandelt sind.

11. Verwendung nach Anspruch 10, **dadurch gekennzeichnet, dass** die Methoden eine Koronabehandlung, vorzugsweise mit Niederfrequenz-/Hochfrequenzkorona, Beflammung, Plasmabehandlung, Fluorierung, Silikatisierung, vorzugsweise Flammpyrolyse von Silanen oder eine Kombination daraus umfassen.

12. Verwendung nach einem der vorangehenden Ansprüche, **dadurch gekennzeichnet, dass** die Fasern beschichtet sind.

13. Verwendung nach Anspruch 12, **dadurch gekennzeichnet, dass** bei der Herstellung der Fasern eine Schlichte aufgetragen ist.

14. Verwendung nach Anspruch 12, **dadurch gekennzeichnet, dass** eine Beschichtung auf den Fasernverbund durch Sprühen, Walzauftrag, Gießen oder Fluten aufgetragen ist.

15. Verwendung nach einem der vorangehenden Ansprüche, **dadurch gekennzeichnet, dass** der Faserverbund mit einer dünnen auslenkbaren Polymerschicht überzogen ist, wobei das Polymermaterial dem der Polymerstreifen entspricht oder unterschiedlich ist.

## Claims

1. Use of a
deflectable arrangement of two polymer strips with a fibrous assemblage connecting the polymer strips edge-sidedly
as a furniture hinge, said use comprising securing one polymer strip to a narrow side of a furniture carcass and the other polymer strip to a narrow side of a door to be fitted to the furniture carcass.

2. Use according to Claim 1, **characterized in that** the fibrous assemblage is a textile sheetlike structure.

3. Use according to Claim 2, **characterized in that** the textile sheetlike structure is a fabric, fibrous nonwoven web, felt, weave, drawn-loop knit, formed-loop knit, braid or milled textile.

4. Use according to any preceding claim, **characterized in that** the textile sheetlike structure consists of fibres.

5. Use according to Claim 4, **characterized in that** the fibres are selected from glass fibres or polyamide fibres or polyester fibres or fibres composed of a polymer material or aramid fibres or carbon fibres or metal fibres or mineral fibres or ceramic fibres.

6. Use according to Claim 4, **characterized in that** the fibres are selected from vegetable fibres and fibres of animal origin, wherein vegetable fibres comprise cotton, kapok, poplar wool, bamboo, stinging nettle, hemp, jute, linen, ramie, wood, sisal, manila, coir, cellulose, miscanthus fibres, and fibres of animal origin comprise wool, alpaca, llama, vicuna, guanaco, angora, rabbit, cashmere, camel hair, mohair, goat's hair, cattle hair, horse hair, and also silks selected from mulberry silk or tussah silk or mollusc silk.

7. Use according to any of Claims 4 to 6, **characterized in that** a blend of the recited fibres is used.

8. Use according to any of Claims 4 to 7, **characterized in that** long or short fibres or mixtures thereof are used.

9. Use according to any preceding claim, **characterized in that** the fibrous assemblage is perforate or slit or selected to have a large mesh size or is otherwise apertured.

10. Use according to any preceding claim, **characterized in that** the fibres/filaments of the fibrous assemblage are surface treated by physical and/or chemical methods.

11. Use according to Claim 10, **characterized in that** the methods comprise a corona treatment, preferably with low-frequency/high-frequency corona, flame treatment, plasma treatment, fluorination, silicatization, preferably flame pyrolysis of silanes or a combination thereof.

12. Use according to any preceding claim, **characterized in that** the fibres are coated fibres.

13. Use according to Claim 12, **characterized in that** a size is applied in the production of the fibres.

14. Use according to Claim 12, **characterized in that** a coating is applied to the fibrous assemblage by spraying, roller application, casting or flooding.

15. Use according to any preceding claim, **characterized in that** the fibrous assemblage is overcoated with a thin deflectable polymeric layer wherein the polymer material corresponds to the polymer strip or is different.

## Revendications

1. Utilisation d'une disposition déformable constituée par deux bandes polymères, présentant un composite fibreux reliant les bords des bandes polymères comme charnière pour meubles, l'une bande polymère étant fixée sur un côté étroit d'un corps d'un meuble et l'autre bande polymère étant fixée sur un côté étroit d'une porte qui vient en butée contre le corps du meuble.

2. Utilisation selon la revendication 1, **caractérisée en ce que** le composite fibreux est une structure plane textile.

3. Utilisation selon la revendication 2, **caractérisée en ce que** la structure plane textile est une étoffe, un non-tissé, un feutre, un tissu, un tricot, un tissu à mailles, une tresse ou un textile fabriqué par foulage.

4. Utilisation selon l'une quelconque des revendications précédentes, **caractérisée en ce que** la structure plane textile est constituée de fibres.

5. Utilisation selon la revendication 4, **caractérisée en ce que** les fibres sont choisies parmi les fibres de verre ou les fibres de polyamide ou les fibres de polyester ou les fibres en un matériau polymère ou les fibres d'aramide ou les fibres de carbone ou les fibres métalliques ou les fibres minérales ou les fibres céramiques.

6. Utilisation selon la revendication 4, **caractérisée en ce que** les fibres sont choisies parmi les fibres végétales et les fibres d'origine animale, les fibres végétales comprenant les fibres de coton, de kapok, de duvet de peuplier, de bambou, d'ortie, de chanvre, de jute, de lin, de ramie, de bois, de sisal, d'abaca, de coco, de cellulose, de miscanthus et les fibres d'origine animale comprenant la laine, l'alpaga, le lama, la vigogne, le guanaco, l'angora, le lapin, le cachemire, le poil de chameau, le mohair, le poil de chèvre, le poil de bovin, le crin, ainsi que les soies, choisies parmi la soie de mûrier ou la soie tussah ou la soie marine.

7. Utilisation selon l'une quelconque des revendications 4 à 6, **caractérisée en ce qu'**une composition mixte des fibres désignées est utilisée.

8. Utilisation selon l'une quelconque des revendications 4 à 7, **caractérisée en ce qu'**on utilise des fibres longues ou des fibres courtes ou des mélanges de celles-ci.

9. Utilisation selon l'une quelconque des revendications précédentes, **caractérisée en ce que** le composite fibreux est percé ou fendu ou choisi avec une grande largeur de maille ou pourvu d'une autre manière de trous.

10. Utilisation selon l'une quelconque des revendications précédentes, **caractérisée en ce que** les fibres/filaments du composite fibreux sont traités en surface par des procédés physiques et/ou chimiques.

11. Utilisation selon la revendication 10, **caractérisée en ce que** les procédés comprennent un traitement au corona, de préférence un corona basse fréquence/haute fréquence, un flambage, un traitement au plasma, une fluoration, une silicatisation, de préférence une pyrolyse à la flamme de silanes ou une combinaison de ces traitements.

12. Utilisation selon l'une quelconque des revendications précédentes, **caractérisée en ce que** les fibres sont revêtues.

13. Utilisation selon la revendication 12, **caractérisée en ce qu'**une colle est appliquée lors de la fabrication des fibres.

14. Utilisation selon la revendication 12, **caractérisée en ce qu'**un revêtement est appliqué sur le composite fibreux par pulvérisation, application au cylindre, coulage ou trempage.

15. Utilisation selon l'une quelconque des revendications précédentes, **caractérisée en ce que** le composite fibreux est revêtu par une mince couche polymère déformable, le matériau polymère correspondant à celui des bandelettes polymères ou étant différent de celui-ci.
